# EUROPÄISCHE PATENTSCHRIFT

(11) **EP 0 319 769 B1**
(45) Veröffentlichungstag und Bekanntmachung des Hinweises auf die Patenterteilung: **31.03.1993**
(21) Anmeldenummer: 88119416.1
(22) Anmeldetag: 22.11.1988
(51) Int. Cl.: G01J 3/46

(54) **Farbsensoranordnung für die Erkennung von Gegenständen mit farbigen Oberflächen**
Colour-sensing device for identifying objects with a coloured surface
Dispositif colorimétrique pour identifier des objets colorés

(30) Priorität: 03.12.1987 DE 3740998
(43) Veröffentlichungstag der Anmeldung: 14.06.1989
(73) Patentinhaber: SIEMENS AKTIENGESELLSCHAFT, 80333 München (DE)
(72) Erfinder: Lugos, Attila, Dipl.-Ing., F-67500 Haguenau (FR)

(56) Entgegenhaltungen:
- EP-A- 0 049 905
- EP-A- 0 109 686
- US-A- 3 336 481
- PATENT ABSTRACTS OF JAPAN, Band 11, Nr. 42 (P-545)[2489], 6. Februar 1987; & JP-A-61 213 650 (CHINO WORKS LTD) 22-09-1986
- PATENT ABSTRACTS OF JAPAN, Band 6, Nr. 171 (P-140)[1049], 4. September 1982, Seite 167 P 140; & JP-A-57 90 145 (KOKUSAI DENSHIN DENWA K.K.) 04-06-1982
- ELEKTROTECHNIK, Band 69, Nr. 3, 27. Februar 1987, Seiten 28-32,37,38; H. HENCKE: "Unterscheiden kleinste Differenzen"

## Beschreibung

Die Erfindung betrifft eine Farbsensoranordnung für die Erkennung von Gegenständen mit zumindest teilweise farbigen Oberflächen gemäß Oberbegriff des Patentanspruches 1.

Bei herkömmlichen nach einem Dreibereichsverfahren arbeitenden Farberkennungsgeräten werden die zu erkennenden Gegenstände mit beispielsweise von einer Halogenlampe erzeugtem weißen Licht beleuchtet. Das reflektierte Licht wird durch Optiken und Normfarbfilter in die Grundfaben rot, grün und blau zerlegt. Die Intensität der einzelnen Farbkomponenten wird dann mit Hilfe von Fotosensoren und diesen nachgeschalteten Empfangsverstärkern in elektrische Signale umgewandelt, welche einem Rechenwerk für eine Farbbestimmung zugeführt werden. Es ist auch bereits vorgeschlagen worden, anstelle von Normfarbfiltern und diesen nachgeschalteten Fotosensoren farbempfindliche Fotodioden zu verwenden, denen über eine Objektivlinse das von einem farbigen Objekt reflektierte Licht zugeführt wird. Dabei erfolgt für eine Farbbestimmung eine Temperaturkompensation der von den Fotodioden gelieferten elektrischen Signale.

Darüber hinaus ist bereits eine Farbsensoranordnung bekannt (EP-A-0 109 686), welche eine Mehrzahl von Licht unterschiedlicher Wellenlängen emittierenden elektronischen Lichtsendern aufweist, die nacheinander ein Objekt, dessen Farbe zu bestimmen ist, durch Lichtimpulse gleicher Intensität kurzzeitig beleuchten. Das von dem Objekt jeweils reflektierte Licht wird einem Fotosensor zugeführt, welcher die Lichtsignale in elektrische Signale umsetzt und diese für eine Auswertung einer Auswerteeinrichtung zuführt. Im Zuge dieser Auswertung wird mit Hilfe eines Schwellwert-Indikators lediglich anhand der nacheinander auftretenden elektrischen Signale das Vorhandensein der durch die einzelnen Lichtsender festgelegten Farbkomponenten überprüft. Eine quantitative Auswertung der Intensität der einzelnen Farbkomponenten, wie sie beispielsweise für eine Bestimmung von beliebigen Mischfarben erforderlich ist, ist dagegen nicht vorgesehen.

Es ist nun Aufgabe der vorliegenden Erfindung, einen Weg zu zeigen, wie bei einer Farbsensoranordnung gemäß Oberbegriff des Patentanspruches 1 eine Farbbestimmung mit einer hohen Genauigkeit durchgeführt werden kann.

Gelöst wird die vorstehend aufgezeigte Aufgabe gemäß der vorliegenden Erfindung durch die im Patentanspruch 1 angegebenen kennzeichnenden Merkmale.

Die Erfindung bringt den Vorteil mit sich, daß mit der Farbsensoranordnung auch unter unterschiedlichen Umweltbedingungen, wie bei schwankenden Umgebungstemperaturen und/oder bei unterschiedlichem Einfall von Umgebungslicht auf das Meßobjekt, eine Farbmessung mit hoher Genauigkeit durchgeführt werden kann.

Ein weiterer Vorteil besteht darin, daß die Farbsensoranordnung voll elektronisch realisiert ist. Durch Wegfall der z.T. beim Stand der Technik erforderlichen mechanisch-/optischen Einrichtungen ist die erfindungsgemäße Farbsensoranordnung nicht nur hinsichtlich der Kosten sondern auch hinsichtlich des Volumens und des Gewichtes wesentlich günstiger realisierbar. Volumen und Gewicht sind insbesondere dann von Bedeutung, wenn eine solche Farbsensoranordnung an Steuereinrichtungen, oder z. B. Handhabungsautomaten (Roboter), anzubringen ist.

Gemäß einer vorteilhaften Ausgestaltung der Erfindung ist vorgesehen, daß die Lichtsender jeweils aus einer Licht eines vorgegebenen schmalbandigen Wellenlängenbereiches emittierenden Leuchtdiode und einem mit dieser verbundenen Sende-Lichtwellenleiter gebildet sind, daß der Lichtempfänger aus einem Fotohalbleiter und einem mit diesem verbundenen Empfangs-Lichtwellenleiter gebildet ist und daß die freien Enden der Sende-Lichtwellenleiter in einem Sensorkopf konzentrisch um das freie Ende des Empfangs-Lichtwellenleiters angeordnet sind. Dies bringt den Vorteil mit sich, daß einerseits die Lichtsender und der Lichtempfänger mit einem geringen schaltungstechnischen Aufwand realisierbar sind und daß andererseits durch die in einem Sensorkopf zusammengefaßten Lichtwellenleiter die Farbsensoranordnung flexibel für beliebige Anwendungsfälle einsetzbar ist.

Weitere vorteilhafte Ausgestaltungen der Erfindung ergeben sich aus den Patentansprüchen 2 und 4 bis 7. Der Vorteil dieser Ausgestaltungen besteht darin, daß der Farbsensoranordnung für die Steuerung der Lichtsender bzw. die Auswertung der von dem Lichtempfänger bereitgestellten elektrischen Signale mit einem geringen schaltungstechnischen Aufwand realisierbare Einrichtungen zugehörig sind.

Im folgenden wird nun die Erfindung anhand von Zeichnungen beispielsweise näher beschrieben.
FIG 1 zeigt ein Blockschaltbild einer Farbsensoranordnung gemäß der vorliegenden Erfindung,
FIG 2 zeigt eine Schnittansicht des in FIG 1 lediglich schematisch dargestellten Sensorkopfes,
FIG 3 zeigt ein detaillierteres Blockschaltbild der in FIG 1 dargestellten Farbsensoranordnung,
FIGUREN 4 und 5 zeigen zwei mögliche Anwendungsfälle für Farbsensoranordnungen und
FIG 6 zeigt ein schematisches Ablaufdiagramm.

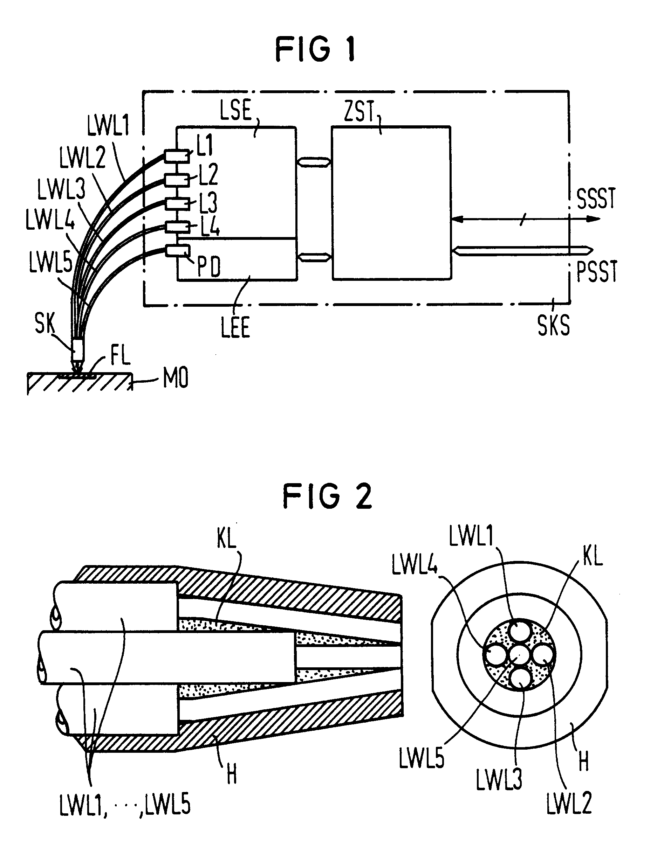

In FIG 1 ist ein Blockschaltbild einer Farbsensoranordnung dargestellt. Diese besteht aus einem Sensorkopf SK, welcher in einem vorgegebenen Abstand über einem zu erkennenden Gegenstand (Meßobjekt) MO geführt ist. Ein Teil der Oberfläche des Gegenstandes ist dabei farbig markiert. In dem Sensorkopf SK sind vier SendeLichtwellenleiter LWL1 bis LWL4 und ein Empfangs-Lichtwellenleiter LWL5 mit ihren freien Enden angeordnet. Die Sende-Lichtwellenleiter sind mit ihrem anderen Ende jeweils mit einem elektronischen Lichtsender verbunden. Die Lichtsender, die entsprechend der Zuordnung zu den Sende-Lichtwellenleitern LWL1 bis LWL4 mit L1 bis L4 bezeichnet sind, bilden Ausgänge einer Sensorkopf-Steuereinrichtung SKS. Bei dem hier vorliegenden Ausführungsbeispiel sind als Lichtsender Leuchtdioden benutzt, die jeweils Licht eines vorgegebenen schmalbandigen Wellenlängenbereiches emittieren. Als dominante Wellenlängen sind 660 nm (rot), 585 nm (gelb), 555 nm (grün) und 480 nm (blau) gewählt, wobei die Toleranz ca. jeweils ± 15 nm beträgt. Diese Leuchtdioden sind mit einer Lichtsendeeinrichtung LSE verbunden, die von einer zentralen Steuereinrichtung ZST her über ein Leitungssystem steuerbar ist.

Der Empfangs-Lichtwellenleiter LWL5 ist mit einem Fotohalbleiter PD, der beispielsweise eine Fotodiode sein möge, verbunden. Dieser Fotohalbleiter, der einen Eingang der bereits genannten Sensorkopf-Steuereinrichtung SKS bildet, ist an eine Lichtempfangseinrichtung LEE angeschlossen, die über ein Leitungssystem mit der bereits genannten zentralen Steuereinrichtung ZST in Verbindung steht. Diese zentrale Steuereinrichtung weist darüber hinaus beispielsweise eine serielle Schnittstelle SSST und eine parallele Schnittstelle PSST auf, über welche sie beispielsweise an externe Geräte, wie z. B. Handhabungsautomaten, anschließbar ist.

Für die Erkennung eines Gegenstandes mit farbiger Oberfläche führt die zentrale Steuereinrichtung ZST in einem Steuerzyklus der Lichtsendeeinrichtung LSE Steuersignale zu. Auf diese Steuersignale hin werden die Leuchtdioden L1 bis L4 nacheinander mit Stromimpulsen, die beispielsweise eine Dauer von 200 bis 500 µs aufweisen mögen, beaufschlagt, die zu einer entsprechenden Abgabe von Lichtimpulsen führen. Mit diesen Lichtimpulsen wird die farbige Oberfläche des zu erkennenden Gegenstandes MO über den Sensorkopf SK kurzzeitig beleuchtet. Das auf das Auftreten der einzelnen Lichtimpulse hin von der farbigen Oberfläche jeweils reflektierte Licht wird über den Sensorkopf SK und den Empfangslichtwellenleiter LWL5 von dem Fotohalbleiter PD aufgenommen und in ein elektrisches Signal umgesetzt. Die im Zuge eines Steuerzyklus von dem Fotohalbleiter nacheinander abgegebenen elektrischen Signale werden dabei über die Lichtempfangseinrichtung LEE der zentralen Steuereinrichtung ZST für eine Farbbestimmung zugeführt. Die Farbbestimmung kann nach bekannten arithmetischen Verfahren, wie sie beispielsweise in den DIN-Formelsammlungen DIN 5053, 6174, 6175 und 55951 angegeben sind, oder nach einem im folgenden beschriebenen "TEACH-IN"-Prinzip durchgeführt sein, je nachdem, ob die spektralen Emissionskurven der Leuchtdioden den farbmetrischen Normspektren entsprechen oder nicht.

In diesem Zusammenhang sei darauf hingewiesen, daß zwar gemäß dem angewandten Verfahren drei jeweils Licht eines vorgegebenen Wellenlängenbereiches (rot, grün, blau) emittierende Lichtsender für eine Farbbestimmung ausreichend sind. Für eine Erhöhung der Anzahl der unterscheidbaren Farben ist jedoch die Anzahl der Lichtsender bei dem hier beschriebenen Ausführungsbeispiel auf vier erhöht. Diese Anzahl kann im Bedarfsfalle weiter erhöht werden.

In FIG 2 ist eine Schnittansicht in axialer Richtung und die Vorderansicht des Sensorkopfes dargestellt. Danach sind die freien Enden der Sende-Lichtwellenleiter LWL1 bis LWL4 und des Empfangs-Lichtwellenleiters LWL5 in einer zu dem Meßobjekt hin konisch sich verjüngenden Sensorhülse H untergebracht und dort mit Hilfe eines geeigneten Klebstoffes KL in ihrer Lage fixiert. Der Empfangs-Lichtwellenleiter LWL5 ist dabei im Zentrum der Sensorhülse angeordnet und wird von den Sende-Lichtwellenleitern LWL1 bis LWL4 konzentrisch umgeben. Die in dem Sensorkopf angeordneten abgemantelten Enden der Lichtwellenleiter sind im übrigen zur Verhinderung von Übersprechen zwischen den einzelnen Lichtwellenleitern mit einer beispielsweise durch Aufsprühen von Farbe undurchsichtigen Schicht versehen.

In FIG 2 ist im übrigen lediglich eine mögliche Ausführungsform für ein Sensorkopf angegeben. Ein solcher Sensorkopf kann jedoch auch je nach dem Einsatzfall der Farbsensoranordnung konstruktiv abweichend ausgebildet sein.

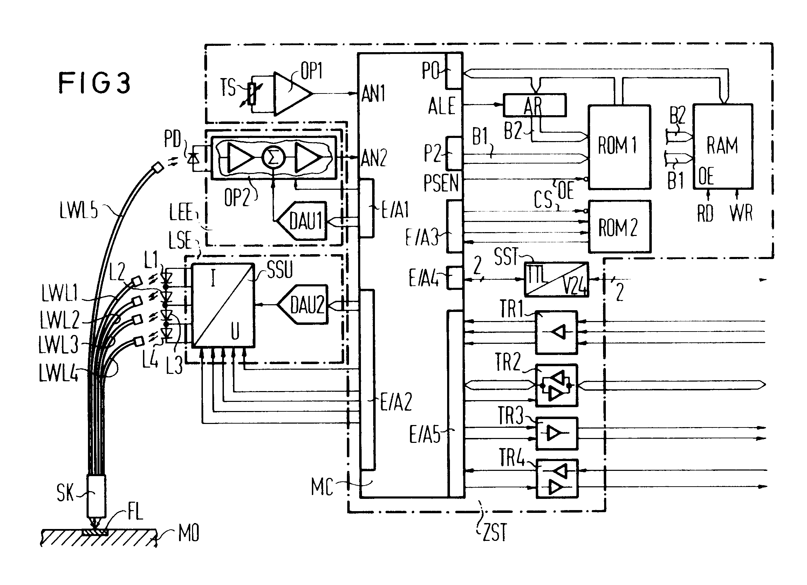

In FIG 3 ist die zuvor beschriebene Farbsensoranordnung detaillierter dargestellt. Die in FIG 1 angegebene zentrale Steuereinrichtung ZST, die, wie zuvor erwähnt, sowohl als Sendesteuereinrichtung als auch als Auswerteeinrichtung dient, ist bei dem vorliegenden Ausführungsbeispiel aus einem Micro-Controller gebildet. Bei diesem möge es sich beispielsweise um einen von der Siemens AG unter der Bezeichnung SAB 80535 angebotenen Micro-Controller handeln. Von diesem Micro-Controller sind in FIG 3 lediglich die für das Verständnis der Wirkungsweise der Farbsensoranordnung erforderlichen Anschlüsse schematisch wiedergegeben. So sind dargestellt zwei analoge Kanäle AN1 und AN2, digitale Ein-/Ausgabe-Anschlußgruppen E/A1 bis E/A5, Ein-/Ausgabe-Kanäle P0 und P2 sowie Steueranschlüsse ALE und PSEN. Bei den in den Ein-/Ausgabe-Anschlußgruppen zusammengefaßten Anschlüssen handelt es sich um Anschlüsse, die bei dem genannten Micro-Controller SAB 80535 den insgesamt vorhandenen sechs Ein-/Ausgabe-Kanälen (Port 0 bis Port 5) zugeordnet sind.

Die für den Betrieb der Farbsensoranordnung erforderlichen Steuerungsprogramme sind in einer externen Festwertspeicher-Anordnung ROM1 gespeichert. Verwendbar sind dafür beispielsweise löschbare Festwertspeicher (EPROM). Bei dem vorliegenden Ausführungsbeispiel ist die Festwertspeicher-Anordnung auf einem Sockel montiert, so daß je nach Anwendungsfall für die Farbsensoranordnung Festwertspeicher gegebenenfalls mit unterschiedlicher Speicherkapazität für die Steuerungsprogramme einsetzbar sind. Angesteuert wird die Festwertspeicher-Anordnung ROM1 von dem Micro-Controller MC her in bekannter Weise über die Ein-/Ausgabe-Kanäle P0 und P2 sowie die Steuerleitungen ALE und PSEN. Durch ein über die Steuerleitung PSEN übertragenes Steuersignal wird dabei die Festwertspeicher-Anordnung ROM1 für einen Zugriff freigegeben. Über die Steuerleitung ALE wird dagegen die Zwischenspeicherung von der Adressierung der Speicherzellen der Festwertspeicher-Anordnung ROM1 dienenden Adressensignalen in einem Adressenregister AR gesteuert.

Mit dem Micro-Controller MC ist eine weitere Festwertspeicher-Anordnung ROM2 über die Ein-/Ausgabe-Anschlußgruppe E/A3 verbunden. In dieser Festwertspeicher-Anordnung sind die für den Betrieb der Farbsensoranordnung erforderlichen Kalibrier- und Steuerungsdaten, auf die im folgenden noch näher eingegangen wird, gespeichert. Die Festwertspeicher-Anordnung besteht dabei beispielsweise aus zumindest einem seriell ansteuerbaren, elektrisch löschbare Festwertspeicher (E²PROM). Es sind jedoch auch beispielsweise parallel ansteuerbare, elektrisch löschbare Festwertspeicher verwendbar, die über die zuvor genannten Ein-/Ausgabe-Kanäle P0 und P2 angesteuert sein können.

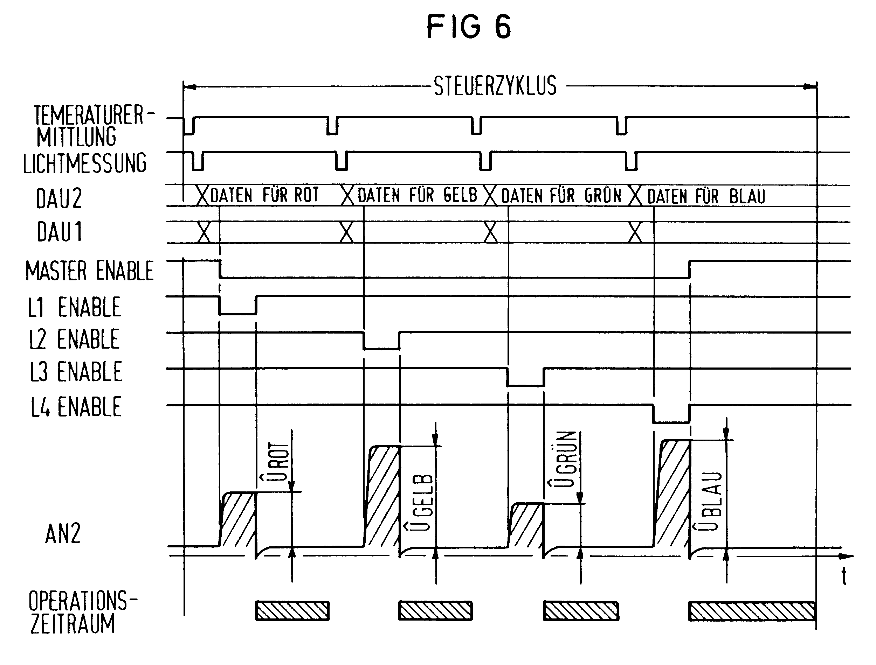

An die Ein-/Ausgabe-Anschlußgruppe E/A2 ist die bereits erwähnte, mit den Leuchtdioden L1 bis L4 verbundene Lichtsendeeinrichtung LSE angeschlossen. Diese besteht aus einem Digital-/Analog-Wandler DAU2 und einem Spannungs-Strom-Umsetzer (SSU) mit einem eingeprägten Ausgangsstrom, mit welchem die Leuchtdioden L1 bis L4 erregt werden. Dieser Spannungs-Strom-Umsetzer weist fünf Steuereingänge auf, die über die Ein-/Ausgabe-Anschlußgruppe E/A2 mit dem Micro-Controller MC verbunden sind. Zu Beginn eines Steuerzyklus für die Ansteuerung der Leuchtdioden wird zunächst über einen der Steuereingänge der Spannungs-Strom-Umsetzer SSU aktiviert (MASTER ENABLE in FIG 6). Anschließend werden die Leuchtdioden nacheinander mit einem vorgegebenen Stromimpuls beaufschlagt. Eine diesen Stromimpulsen entsprechende Spannung erhält der Spannungs-Strom-Umsetzer über den Digital-/Analog-Umsetzer DAU2 zugeführt (DAU2, L1 ENABLE,...,L4 ENABLE in FIG 6). Die Stromimpulse für die einzelnen Leuchtdioden werden dabei im Zuge eines Kalibriervorganges derart festgelegt, daß die von den Leuchtdioden jeweils emittierten Lichtimpulse bei einer Reflexion an weißen Normvorlagen am Ausgang des Fotohalbleiters PD elektrische Signale gliecher Intensität hervorrufen.

An den analogen Kanal AN1 ist ein Temperatursensor angeschlossen, welcher beispielsweise aus einem Heißleiter TS und einem mit diesem verbundenen Operationsverstärker OP1 gebildet ist und einen Meßwert für die Umgebungstemperatur liefert. Nach Maßgabe dieser bereitgestellten Temperaturangaben und Angaben bezüglich der temperaturabhängigen Emissionskennlinie der Leuchtdioden L1 bis L4, die in der bereits genannten Festwertspeicher-Anordnung ROM2 gespeichert sind, führt der Micro-Controller MC dem Digital-/Analog -Umsetzer DAU2 ein dem Sollstrom für die Leuchtdioden entsprechenden digital codierten Spannungswert zu.

Mit dem analogen Kanal AN2 ist der Ausgang der bereits erwähnten Lichtempfangseinrichtung LEE angeschlossen. Diese besteht aus einer mehrstufigen Operationsverstärker-Anordnung OP2, von welcher eine Reihenschaltung aus zwei Operationsverstärkern und einem dazwischenliegenden Summierglied dargestellt ist. Das Summierglied ist dabei zusätzlich mit dem Ausgang eines an die Ein-/Ausgabe-Anschlußgruppe E/A1 angeschlossenen Digital-/Analog-Umsetzer DAU1 verbunden. Über diesen erhält die Operationsverstärker-Anordnung OP2 von dem Micro-Controller her Kompensationssignale für eine Kompensation von durch Fehlspannungen und/ oder Störlichtkomponenten bedingte Offsetspannung zugeführt.

Fehlspannungen können beispielsweise durch eine Exemplarstreuung der Umsetzkennlinie des eingesetzten Fotohalbleiters und/oder der Verstärkung der Operationsverstärker-Anordnung sowie durch eine Temperaturabhängigkeit der Umsetzkennlinie des Fotohalbleiters verursacht sein. Der durch die Temperaturabhängigkeit der Umsetzkennlinie bedingte Anteil an dem Kompensationssignal wird dabei von dem Micro-Controller MC nach Maßgabe der von dem bereits genannten Temperatursensor bereitgestellten Temperaturangaben (TEMPERATURERMITTLUNG in FIG 6) und Angaben bezüglich der temperaturabhängigen Umsetzkennlinie des Fotohalbleiters, die in der bereits genannten Festwertspeicher-Anordnung ROM2 gespeichert sind, gebildet.

Störlichtkomponenten können dagegen durch von dem Fotohalbleiter empfangenes Umgebungslicht verursacht sein. Um derartige Störlichtkomponenten zu kompensieren, wird bei dem vorliegenden Ausführungsbeispiel zu Beginn eines jeden Steuerzyklus vor einer Ansteuerung der Leuchtdioden L1 bis L4 eine Lichtmessung durchgeführt (LICHTMESSUNG in FIG 6) und ein dem empfangenen Umgebungslicht entsprechender Kompensationssignalanteil gebildet. Aus diesem Kompensationssignalanteil und dem Fehlspannungen berücksichtigenden Kompensationssignalanteil wird anschließend ein Gesamt-Kompensationssignal gebildet, welches der Operationsverstärker-Anordnung OP2 für die Dauer eines Steuerzyklus zugeführt wird (DAU1 in FIG 6).

Der Micro-Controller MC kann anhand der ihm über den analogen Kanal AN2 im Zuge eines Steuerzyklus nacheinander zugeführten elektrischen Signale (AN2 in FIG 6) durch arithmetische und logische Operationen (OPERATIONS-ZEITRAUM in FIG 6) wahlweise eine absolute oder eine relative Farbbestimmung vornehmen. Dafür sind in der Festwertspeicher-Anordnung ROM2 einerseits in digital codierter Form Farbgrenzwerte gespeichert, innerhalb deren der Micro-Controller eine absolute Farbbestimmung vornimmt, d. h. er ermittelt einen innerhalb dieser Farbgrenzwerte liegenden Wert und stellt ein entsprechendes digital codiertes Signal zur Verfügung. Andererseits sind in der Festwertspeicher-Anordnung ROM2 auch festgelegte zu ermittelnde Farbwerte in digital codierter Form speicherbar. Beispielsweise sind 16 verschiedene Farbwerte mit Toleranzangaben vorgebbar, die von dem Micro-Controller MC zu erkennen sind (TEACH-IN-Prinzip). Dafür werden im Zuge eines "TEACH-IN"-Vorganges farbige Vorlagen, die den zu erkennenden Farbwerten entsprechen, nacheinander im Zuge eines Steuerzyklus durch die von den Leuchtdioden L1,..., L4 emittierten Lichtimpulse kurzzeitig beleuchtet. Die dadurch am Ausgang des Fotohalbleiters PD für die einzelnen Farbwerte nacheinander auftretenden elektrischen Signale, die den einzelnen Farbkomponenten des jeweiligen Farbwertes entsprechen, werden digital codiert und in der Festwertspeicher-Anordnung ROM2 farbwertindividuell gespeichert, d. h. bei dem vorliegenden Ausführungsbeispiel werden für jeden Farbwert entsprechend der vier Leuchtdioden vier digital codierte Farbkomponenten gespeichert.

Während des Betriebs der Farbsensoranordnung vergleicht dann der Micro-Controller MC für eine Farbbestimmung eines Objektes im Zuge eines Steuerzyklus die ihm nacheinander zugeführten vier elektrischen Signale nach deren Digitalisierung mit den Farbkomponenten der in der Festwertspeicher-Anordnung ROM2 gespeicherten Farbwerte und gibt ein entsprechendes digitales Meldesignal ab. Aus diesem geht hervor, ob die Farbe des beleuchteten Objektes einem gespeicherten Farbwert entspricht. Dabei können bei einem bekannten Farbwert beispielsweise alternativ ein diesem entsprechender Farbcode oder die diesem Farbwert zugehörigen Farbkomponenten angegeben sein. Bei Ermittlung einer unbekannten Farbe können bei dem vorliegenden Ausführungsbeispiel dagegen in dem Meldesignal auch Angaben bezüglich des der unbekannten Farbe am nächsten kommenden gespeicherten Farbwertes in Form eines Farbcodes oder der Farbkomponenten enthalten sein.

Die Farbbestimmung erfolgt im übrigen in der Weise, daß im Zuge eines Steuerzyklus mit jedem Auftreten eines einer bestimmten Farbkomponente entsprechenden Signales am Eingang AN2 des Micro-Controllers MC unmittelbar ein Vergleich (in FIG 6 mit "OPERATIONS-ZEITRAUM" bezeichnet) mit der jeweils in Frage kommenden Farbkomponente der gespeicherten Farbwerte durchgeführt wird.

Dabei werden im Zuge der ersten drei Vergleichsvorgänge jeweils diejenigen gespeicherten Farbwerte ermittelt, die in den nachfolgenden Vergleichsvorgang einzubeziehen sind. Damit sind durch die ersten drei Vergleichsvorgänge die in Frage kommenden Farbwerte bereits soweit selektiert, daß mit dem letzten Vergleichsvorgang innerhalb des Steuerzyklus unmittelbar das Ergebnis der Farbbestimmung vorliegt und damit die Ausgabe eines Meldesignals erfolgen kann.

Die Farbbestimmung kann für den Fall, daß die Emissionskurven der Leuchtdioden den farbmetrischen Normspektren entsprechen, auch, wie bereits erwähnt, nach bekannten arithmetischen Verfahren erfolgen. Für die Durchführung der arithmetischen Operationen kann der Micro-Controller MC beispielsweise durch einen Arithmetik-Prozessor unterstützt sein.

Die in FIG 3 angegebenen Ein-/Ausgabe-Anschlußgruppen E/A4 und E/A5 stellen die in FIG 1 mit SST und PSST bezeichneten Schnittstellen dar. Die Ein-/Ausgabe-Anschlußgruppe E/A4 bildet dabei beispielsweise zusammen mit einer Schnittstellen-Anordnung SST eine serielle standardisierte RS232C/V24-Schnittstelle. Bei der parallelen Schnittstelle, die durch die Ein-/Ausgabe-Anschlußgruppe E/A5 gebildet ist, möge es sich beispielsweise um eine sogenannte Centronix-Schnittstelle handeln. In die einzelnen Schnittstellenleitungen dieser Schnittstelle sind Treiberstufen TR1 bis TR3 geschaltet.

Über die gerade genannten Schnittstellen kann die zuvor erläuterte Farbsensoranordnung mit externen Einrichtungen kommunizieren, um beispielsweise von einem externen Gerät her zu einer Farbbestimmung auffordernde Steuersignale zu empfangen bzw. nach einer Farbbestimmung die erkannte Farbe betreffende Meldesignale an das jeweilige externe Gerät abzugeben. Darüber hinaus können über diese Schnittstelle die für eine zuvor erwähnte absolute oder relative Farbbestimmung vorgegebenen Farbgrenzwerte bzw. Farbwerte eingegeben werden.

Neben den genannten Schnittstellen ist noch eine weitere, aus einem Unterbrechungseingang (INTERRUPT-INPUT) und einem Unterbrechungsausgang (INTERRUPT-OUTPUT) gebildete Schnittstelle vorgesehen. In die Schnittstellenleitungen sind Treiberstufen TR4 (FIG 3) eingefügt. Über diese Schnittstellenleitungen sind von dem Micro-Controller MC immer dann Unterbrechungssignale aufnehmbar bzw. abgebbar, wenn in bestimmten Notsituationen, wie z. B. bei Fehlfunktionen der Farbsensoranordnung oder der mit dieser verbundenen externen Einrichtung, eine Signalübertragung über die zuvor genannten Schnittstellen von der Geschwindigkeit her nicht ausreichend ist.

Im übrigen sei noch darauf hingewiesen, daß die von dem Micro-Controller MC innerhalb eines vorgegebenen Zeitintervalles ermittelten Farbwerte in einer in FIG 3 mit RAM bezeichneten Schreib-/Lese-Speicher-Anordnung speicherbar sind, um diese beispielsweise später statistisch auszuwerten.

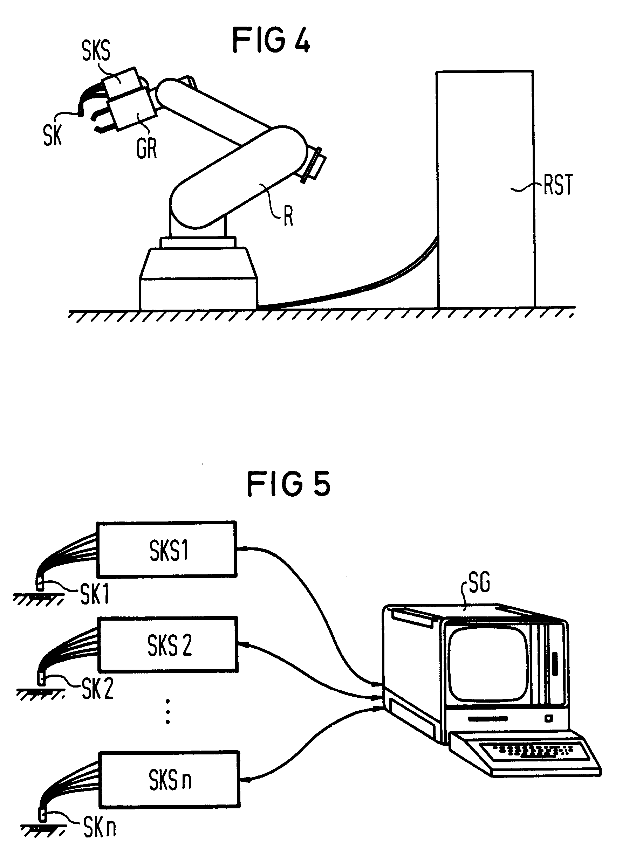

Die zuvor anhand der FIGUREN 1 bis 3 erläuterte Farbsensoranordnung ist allgemein für Meß- und Steuerungsszwecke einsetzbar. Zwei mögliche Anwendungsfälle sind in den FIGUREN 4 und 5 dargestellt. Bei der in FIG 4 dargestellten Anordnung handelt es sich um einen Roboter R, der von einer Robotersteuerung RST her gesteuert ist. An dem Greifer GR dieses Roboters ist eine Farbsensoranordnung der zuvor beschriebenen Art für eine Erkennung farbiger Gegenstände angebracht. Nach Maßgabe der von dieser Farbsensoranordnung gelieferten Meßergebnisse wird der Greifer GR gesteuert. Die von der Farbsensoranordnung gelieferten Meßergebnisse können dabei je nach Ausgestaltung des Roboters über eine der beiden zuvor beschriebenen Schnittstellen der Farbsensoranordnung direkt dem Greifer oder der Robotersteuerung RST zugeführt werden.

Bei der in FIG 5 dargestellten Anordnung handelt es sich um eine Steuereinrichtung, an welche eine Vielzahl von Farbsensoranordnungen (SK1, SKS1;...;SKn, SKSn) über jeweils eine serielle Schnittstelle mit einer zentralen Steuereinrichtung, beispielsweise in Form eines Personal-Computers, angeschlossen ist. Eine solche Anordnung kann beispielsweise in Fertigungsprozessen für eine Fließbandüberwachung anhand von farbig markierten Gegenständen eingesetzt werden.

## Patentansprüche

1. Farbsensoranordnung für die Erkennung von zumindest teilweise farbige Oberflächen (FL) aufweisenden Gegenständen (MO), mit zumindest drei jeweils Licht eines vorgegebenen schmalbandigen Wellenlängenbereiches emittierenden elektronischen Lichtsendern (L1, LWL1; L2, LWL2; L3, LWL3; L4, LWL4), welche unter der Steuerung einer Sender-Steuereinrichtung (ZST) im Zuge eines Steuerzyklus nacheinander die farbige Oberfläche des jeweiligen Gegenstandes durch Lichtimpulse vorgegebener Intensität kurzzeitig beleuchten, mit einem elektronischen Lichtempfänger (PD), welcher das auf das Auftreten der Lichtimpulse hin von der farbigen Oberfläche jeweils reflektierte Licht aufnimmt und in ein elektrisches Signal mit einer dem reflektierten Licht entsprechenden Intensität umsetzt,
und mit einer Auswerteeinrichtung (ZST), welcher die von dem Lichtempfänger im Zuge eines Steuerzyklus nacheinander abgegebenen elektrischen Signale für eine Farbbestimmung zugeführt sind,
**dadurch gekennzeichnet**,
daß wenigstens ein Temperaturangaben bezüglich der Umgebungstemperatur bereitstellender Temperatursensor (TS, OP1) vorgesehen ist,
daß im Zuge eines Steuerzyklus den elektronischen Lichtsendern nach Maßgabe der Temperaturangaben und der Sende-Steuereinrichtung zur Verfügung stehenden Angaben bezüglich der temperaturabhängigen Emissionskennlinien jeweils ein individuell festgelegter Stromimpuls zugeführt ist,
daß die Auswerteeinrichtung nach Maßgabe der Temperaturangaben und ihr zur Verfügung stehenden Angaben bezüglich der temperaturabhängigen Umsetzkennlinie des Lichtempfängers und ggf. nach Maßgabe einer vor Empfang eines elektrischen Signals durchgeführten Umgebungslichtmessung für jedes empfangene elektrische Signal eine Kompensation von Störsignalanteilen vornimmt und daß die Auswerteeinrichtung anschließend anhand der Intensität der einzelnen, hinsichtlich der Störsignalanteile befreiten elektrischen Signale eine Farbbestimmung nach Maßgabe von dieser zur Verfügung stehenden Vergleichsfarbwerten vornimmt.

2. Farbsensoranordnung nach Anspruch 1, **dadurch gekennzeichnet**,
daß der Auswerteeinrichtung (ZST) als Vergleichsfarbwerte für eine absolute Farbmessung Farbgrenzwerte und für eine relative Farbmessung vorgegebene Farbwerte zur Verfügung stehen.

3. Farbsensoranordnung nach Anspruch 1 oder 2,
**dadurch gekennzeichnet**,
daß die Lichtsender jeweils aus einer Licht eines vorgegebenen schmalbandigen Wellenlängenbereiches emittierenden Leuchtdiode (L1,..., L4) und einem mit dieser verbundenen Sende-Lichtwellenleiter (LWL1,...,LWL4) gebildet sind,
daß der Lichtempfänger aus einem Fotohalbleiter (PD) und einem mit diesem verbundenen Empfangs-Lichtwellenleiter (LWL5) gebildet ist
und daß die freien Enden der Sende-Lichtwellenleiter in einem Sensorkopf (SK) konzentrisch um das freie Ende des Empfangs-Lichtwellenleiters angeordnet sind.

4. Farbsensoranordnung nach Anspruch 3, **dadurch gekennzeichnet**,
daß die den Lichtsendern zugehörigen Leuchtdioden (L1,...,L4) gemeinsam an eine Strom-Regeleinrichtung (SSU) angeschlossen sind, welche von der Sende-Steuereinrichtung (ZST) her mit den den Lichtsendern individuell zuzuführenden Stromimpulsen entsprechenden Steuersignalen beaufschlagt ist,
und daß dem Lichtempfänger (PD) ein Regelverstärker (OP2) nachgeschaltet ist, welcher von der Auswerteeinrichtung (ZST) her Kompensationssignale für die Unterdrückung von Störsignalanteilen in den elektrischen Signalen zugeführt erhält.

5. Farbsensoranordnung nach Anspruch 4,
**dadurch gekennzeichnet**,
daß die Bereitstellung der Temperaturangaben und die Umgebungslichtmessung innerhalb eines Steuerzyklus vor Abgabe des ersten Steuersignals durch die Sende-Steuereinrichtung (ZST) erfolgen.

6. Farbsensoranordnung nach einem der Ansprüche 1 bis 5,
**dadurch gekennzeichnet**,
daß die Sende-Steuereinrichtung und die Auswerteeinrichtung gemeinsam aus einem Micro-Controller-System (MC) gebildet sind.

7. Farbsensoranordnung nach Anspruch 6,
**dadurch gekennzeichnet**,
daß das Micro-Controller-System (MC) über wenigstens eine serielle und eine parallele Schnittstelle (SST und TR1 bis TR3) sowie über Unterbrechungsein-/Ausgänge mit externen Einrichtungen verbindbar ist.

## Claims

1. Colour sensor arrangement for recognising objects (MO) at least partially having coloured surfaces (FL), having at least three electronic opto-transmitters (L1, LWL1; L2, LWL2; L3, LWL3; L4, LWL4), which in each case emit light of a prescribed narrow-band range of wavelengths and briefly successively illuminate the coloured surface of the respective object by means of light pulses of prescribed intensity in the course of a control cycle under the control of a transmitting control device (ZST), having an electronic opto-receiver (PD), which receives the light reflected in each case from the coloured surface upon the occurrence of the light pulses and converts it into an electrical signal having an intensity corresponding to the reflected light, and having an evaluation device (ZST), to which electrical signals successively emitted by the opto-receiver in the course of a control cycle are fed for colour determination, characterised in that at least one temperature sensor (TS, OP1) is provided which supplies temperature data on the ambient temperature, in that in the course of a control cycle the electronic optotransmitters are in each case fed an individually determined current pulse in accordance with the temperature data and with the data available to the transmitting control device on the temperature-dependent emission characteristics, in that the evaluation device makes a compensation of interference signal components for each received electrical signal in accordance with the temperature data and with the data available to it on the temperature-dependent conversion characteristic of the opto-receiver and, as the case may be, in accordance with an ambient light measurement carried out before reception of an electrical signal, and in that with the aid of the intensity of the individual electrical signals freed from the interference signal components the evaluation device subsequently makes a colour determination in accordance with comparison colour values available thereto.

2. Colour sensor arrangement according to Claim 1, characterised in that the evaluation device (ZST) has colour limit values available as comparison colour values for an absolute colour measurement, and prescribed colour values for a relative colour measurement.

3. Colour sensor arrangement according to Claim 1 or 2, characterised in that the opto-transmitter in each case comprises a light-emitting diode (L1, ..., L4) emitting light of a prescribed narrow-band range of wavelengths and a transmitting optical waveguide (LWL1, ..., LWL4) connected thereto, in that the opto-receiver is formed from a photosemiconductor (PD) and a receiving optical waveguide (LWL5) connected thereto, and in that the free ends of the transmitting optical waveguides are arranged concentrically in a sensor head (SK) around the free end of the receiving optical waveguide.

4. Colour sensor arrangement according to Claim 3, characterised in that the light-emitting diodes (L1, ..., L4) associated with the opto-transmitters are jointly connected to a current control device (SSU) to which are applied from the transmitting control device (ZST) the control signals corresponding to the current pulses individually fed to the opto-transmitters, and in that connected downstream of the opto-receiver (PD) is a control amplifier (OP2) which is fed from the evaluation device (ZST) compensation signals for suppressing interference-signal components in the electrical signals.

5. Colour sensor arrangement according to Claim 4, characterised in that the supply of the temperature data and the ambient light measurement are performed within a control cycle before emission of the first control signal by the transmitting control device (ZST).

6. Colour sensor arrangement according to one of Claims 1 to 5, characterised in that the transmitting control device and the evaluation device are jointly formed from a micro-controller system (MC).

7. Colour sensor arrangement according to Claim 6, characterised in that the micro-controller system (MC) can be connected to external devices via at least one serial and one parallel interface (SST and TR1 to TR3) and via interrupt in-/outputs.

## Revendications

1. Dispositif à capteurs chromatiques pour identifier des objets (MO) qui présentent des surfaces (FL) au moins partiellement colorées, comportant au moins trois sources électroniques (L1, LWL1; L2, LWL2; L3, LWL3; L4, LWL4) d'émission de lumière qui émettent respectivement de la lumière d'une plage de longueur d'onde à bande étroite déterminée à l'avance et qui éclairent, au cours d'un cycle de commande, brièvement et successivement la surface colorée de l'objet concerné, sous la commande d'un dispositif de commande (SKS) des émetteurs, avec des impulsions lumineuses d'intensité déterminée à l'avance, et comportant un récepteur électronique (PD) de lumière, qui, à l'apparition des impulsions lumineuses, capte la lumière réfléchie par la surface colorée et la transforme en un signal électrique d'une intensité correspondant à la lumière réfléchie,
et comportant un dispositif d'évaluation (ZST), auquel sont envoyés les signaux électriques émis successivement, au cours d'un cycle de commande, par le récepteur de lumière pour une détermination de la couleur, caractérisé
en ce qu'il est prévu au moins un capteur de température (TS, OP1) donnant des indications de température concernant la température ambiante,
en ce que, au cours d'un cycle de commande, on applique aux sources électroniques de lumière une impulsion individuelle et fixée de courant en fonction des indications concernant la température et des indications disponibles pour le dispositif de commande de l'émission et concernant les courbes caractéristiques d'émission qui dépendent de la température,
en ce que le dispositif d'évaluation procède, pour chaque signal électrique reçu, à une compensation des parties parasites du signal, en fonction des indications de la température et des indications mises à sa disposition et concernant la courbe caractéristique de conversion qui dépend de la température du récepteur de lumière et, le cas échéant, en fonction d'une mesure de la lumière ambiante effectuée avant la réception d'un signal électrique,
et en ce que le dispositif d'évaluation procède ensuite, à l'aide de l'intensité des différents signaux électriques débarrassés de la partie des signaux parasites, à une détermination de la couleur en fonction des valeurs chromatiques de comparaison de couleurs mises à la disposition de ce dispositif.

2. Dispositif à capteurs chromatiques selon la revendication 1, caractérisé en ce que des valeurs chromatiques limites pour une chromatométrie absolue et des valeurs chromatiques déterminées à l'avance pour une chromatométrie relative, sont mises à la disposition du dispositif d'évaluation (ZST) comme valeurs chromatiques de comparaison.

3. Dispositif à capteurs chromatiques selon la revendication 1 ou 2, caractérisé
en ce que émetteurs de lumière sont formées respectivement d'une diode électroluminescente (L1, ..., L4) émettant une lumière d'une plage de longueurs d'onde à bande étroite déterminée à l'avance et d'un guide d'ondes lumineuses d'émission (LWL1, ..., LWL4) relié à cette diode électroluminescente,
en ce que le récepteur de lumière est formé d'un semiconducteur photosensible (PD) et d'un guide d'ondes lumineuses de réception (LWL5) relié à ce semiconducteur photosensible,
et en ce que les extrémités libres des guides d'ondes lumineuses d'émission sont disposées dans une tête de détection (SK), concentriquement autour de l'extrémité libre du guide d'ondes lumineuses de réception.

4. Dispositif à capteurs chromatiques selon la revendication 3, caractérisé
en ce que les diodes électroluminescentes (L1, ..., L4) associées aux sources lumineuses sont reliées en commun à un dispositif de réglage du courant (SSU), lequel reçoit, de la part du dispositif de commande d'émission (ZST), des signaux de commande qui correspondent aux impulsions de courant à appliquer individuellement aux sources lumineuses,
et en ce qu'un amplificateur de réglage (OP2) est monté en aval du récepteur de lumière (PD), cet amplificateur recevant du dispositif d'évaluation (ZST) des signaux de compensation pour la suppression de la partie des signaux parasites contenue dans les signaux électriques.

5. Dispositif à capteurs chromatiques selon la revendication 4, caractérisé
en ce que la mise à disposition des indications de la température et la mesure de lumière ambiante ont lieu, au cours d'un cycle de commande, avant l'émission du premier signal de commande par le dispositif de commande d'émission (ZST).

6. Dispositif à capteurs chromatiques selon l'une des revendications 1 à 5, caractérisé
en ce que le dispositif de commande d'émission et le dispositif d'évaluation sont formés ensembles d'un système microcontrôleur (MC).

7. Dispositif à capteurs chromatiques selon la revendication 6, caractérisé
en ce que le système microcontrôleur (MC) est susceptible d'être relié à des dispositifs externes par l'intermédiaire d'au moins une interface série et une interface parallèle (SST et TR1 à TR3) ainsi que par l'intermédiaire d'entrées/sorties d'interruption.
